# EUROPEAN PATENT APPLICATION

(11) **EP 4 579 867 A1**
(43) Date of publication of application: **02.07.2025**
(21) Application number: 23857791.0
(22) Date of filing: 25.08.2023
(51) Int. Cl.: H01M 10/42, H01M 10/0587, H01M 50/531

(54) **ELECTRODE ASSEMBLY AND SECONDARY BATTERY INCLUDING SAME**

(30) Priority: 25.08.2022 KR 20220107111
(71) Applicant: LG Energy Solution, Ltd., Seoul 07335 (KR)
(72) Inventor: LEE, Ha Na, Daejeon 34122 (KR)
(74) Representative: Goddar, Heinz J.
(86) International application number: PCT/KR2023/012673
(87) International publication number: WO 2024/043759

(57) **Abstract**

The present invention relates to an electrode assembly and a secondary battery including the same. An electrode assembly according to an embodiment of the present invention may include: a positive electrode and a negative electrode; a separator disposed between the positive electrode and the negative electrode; and a plurality of conductive members disposed between at least one of the positive electrode or the negative electrode and the separator, wherein at least one electrode of the positive electrode and the negative electrode may include: a collector; a first active material layer disposed on an inner surface of the collector; a second active material layer disposed on an outer surface of the collector, wherein the conductive member includes: a first conductive member disposed to overlap an end of the first active material layer so as to form a first conductive path together with the collector; and a second conductive member disposed to overlap an end of the second active material layer so as to form a second conductive path between the collector and the second active material layer.

## Description

### TECHNICAL FIELD

### CROSS-REFERENCE TO RELATED APPLICATION

The present application claims the benefit of the priority of Korean Patent Application No. 10-2022-0107111, filed on August 25, 2022, which is hereby incorporated by reference in its entirety.

### TECHNICAL FIELD

The present invention relates to an electrode assembly and a device including the same, and more specifically, to an electrode assembly capable of improving safety and a secondary battery including the same.

### BACKGROUND ART

Recently, as demands for portable electronic products such as laptops, video cameras, and mobile phones have rapidly increased, and development of electric vehicles, energy storage batteries, robots, satellites, etc. is regularized, a lot of researches have been conducted on a secondary battery used as a driving power source.

Rechargeable batteries are classified into coin type batteries, cylindrical type batteries, prismatic type batteries, and pouch type batteries according to a shape of a battery case. The electrode assembly mounted inside the battery case is a chargeable and dischargeable power generation device having a structure in which electrodes and separators are stacked.

When a charge/discharge cycle of the secondary battery including the electrode assembly is repeated, stress caused by expansion and contraction of the electrode may be accumulated inside the electrode assembly. If the stress accumulation exceeds a certain limit, deformation of the electrode assembly may occur to cause decrease in stability and detects in performance of the battery.

### DISCLOSURE OF THE INVENTION

### TECHNICAL PROBLEM

Embodiments of the present invention provide an electrode assembly capable of improving stability and a secondary battery including the same.

The object of the present invention is not limited to the aforesaid, but other objects not described herein will be clearly understood by those skilled in the art from descriptions below.

### TECHNICAL SOLUTION

An electrode assembly according to an embodiment of the present invention may include: a positive electrode and a negative electrode; a separator disposed between the positive electrode and the negative electrode; and a plurality of conductive members disposed between at least one of the positive electrode or the negative electrode and the separator, wherein at least one electrode of the positive electrode and the negative electrode may include: a collector; a first active material layer disposed on an inner surface of the collector; a second active material layer disposed on an outer surface of the collector, wherein the conductive member includes: a first conductive member disposed to overlap an end of the first active material layer so as to form a first conductive path together with the collector; and a second conductive member disposed to overlap an end of the second active material layer so as to form a second conductive path between the collector and the second active material layer.

According to an embodiment, the end of the first active material layer may be disposed closer to the end of the collector than the end of the second active material layer.

According to an embodiment, the first conductive member may be disposed on the inner surface of the collector to form the first conductive path between the first active material layer and the collector, and the second conductive member is disposed on the outer surface of the collector to form the second conductive path that is electrically connected to the first conductive path.

According to an embodiment, the first conductive member and the second conductive member may be disposed to be spaced apart from each other on the outer surface of the collector, and the first conductive path and the second conductive path may be electrically connected to each other.

According to an embodiment, the conductive member may include: a base material layer disposed between the separator and the electrode; and an adhesive conductive layer which is disposed on the base material layer, comprises a first conductive material, and is attached to the electrode.

According to an embodiment, the first conductive material may be made of the same material as the collector and be aligned in the form of a dot, linear, or pattern.

According to an embodiment, the first conductive material may include at least one metal powder of Al, Cu, Ni, Au, and Pt.

According to an embodiment, the base material layer may include at least one of a second conductive material or an insulating member.

According to an embodiment, at least one of the first conductive member or the second conductive member may be attached between one of the first and second active material layers and the collector, and the base material layer may include at least one of a polymer or a carbon-based material.

According to an embodiment, at least one of the first conductive member or the second conductive member may be attached to the collector except for the first active material layer and the second active material layer, and the base material layer may include at least one of Al, Cu, or fabric.

According to an embodiment, the first conductive material may be electrically connected to the second conductive material.

According to an embodiment, the electrode may be divided into: a coating portion comprising the collector, the first active material layer, and the second active material layer; and a non-coating portion which does not comprise at least one of the first active material layer or the second active material layer and comprises the collector, wherein an electrode tab may be attached to the non-coating portion of the electrode.

According to an embodiment, at least one of the first conductive member or the second conductive member may be disposed between at least one of both sides of the electrode tab and the collector.

According to an embodiment, the electrode assembly may further include a third conductive member disposed on the non-coating portion of the negative electrode and disposed at a position corresponding to a winding finish end of the positive electrode.

According to an embodiment, the third conductive member may be disposed on the same plane as at least a portion of the first conductive member.

According to an embodiment, the first conductive member may be configured to cover a winding finish end of the first active material layer, and the second conductive member may be configured to cover a winding finish end of the second active material layer.

A secondary battery according to an embodiment of the present invention may include the above-described electrode assembly.

### ADVANTAGEOUS EFFECTS

According to the embodiments of the present invention, the plurality of conductive members disposed on at least one area of the electrode, on which the cracks are likely to occur may be provided. Therefore, even if the disconnection occurs due to the cracks in the electrode, the electrical connection within the electrode may be maintained through the conductive member to improve the cell performance degradation and ensure the stability.

In addition, the various effects that are directly or indirectly identified through the present disclosure may be provided.

### BRIEF DESCRIPTION OF THE DRAWINGS

FIG. 1 is a perspective view of a secondary battery including an electrode assembly according to a first embodiment of the present invention.
FIG. 2 is an exploded perspective view illustrating an unfolded state before the electrode assembly of FIG. 1 is wound.
FIGS. 3a to 3d are cross-sectional views illustrating various examples of a negative electrode conductive member and a negative electrode tab, which are attached to a negative electrode illustrated in FIG. 2.
FIGS. 4a to 4c are perspective views illustrating various examples of a conductive member illustrated in FIG. 2.
FIG. 5 is an exploded view illustrating a state in which a positive electrode and a negative electrode are unfolded before the electrode assembly is wound according to a second embodiment of the present invention.
FIGS. 6a to 6c are plan views illustrating a state in which a negative electrode and a positive electrode, to which at least one electrode tab is attached before the electrode assembly is wound, according to the present invention.
FIG. 7 is an exploded view for explaining a non-coating portion disposed on a winding central portion illustrated in FIGS. 6a to 6c in detail.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following embodiments.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Secondary battery including electrode assembly according to first embodiment

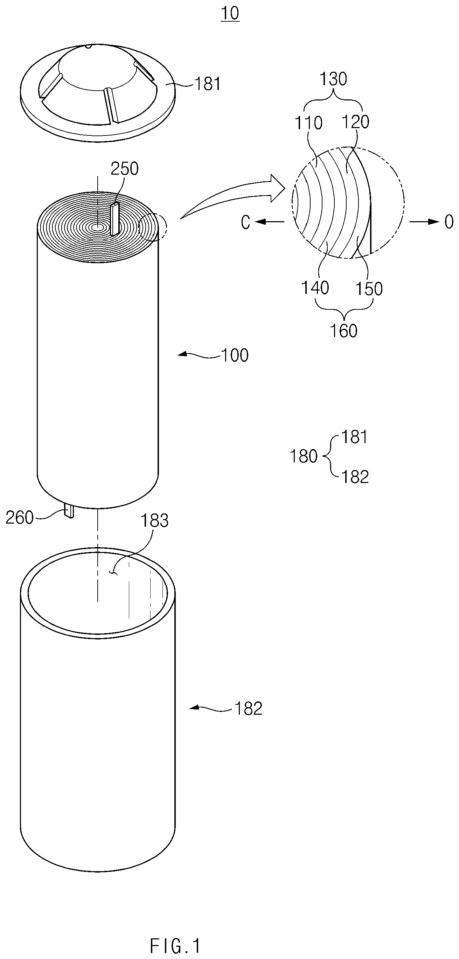

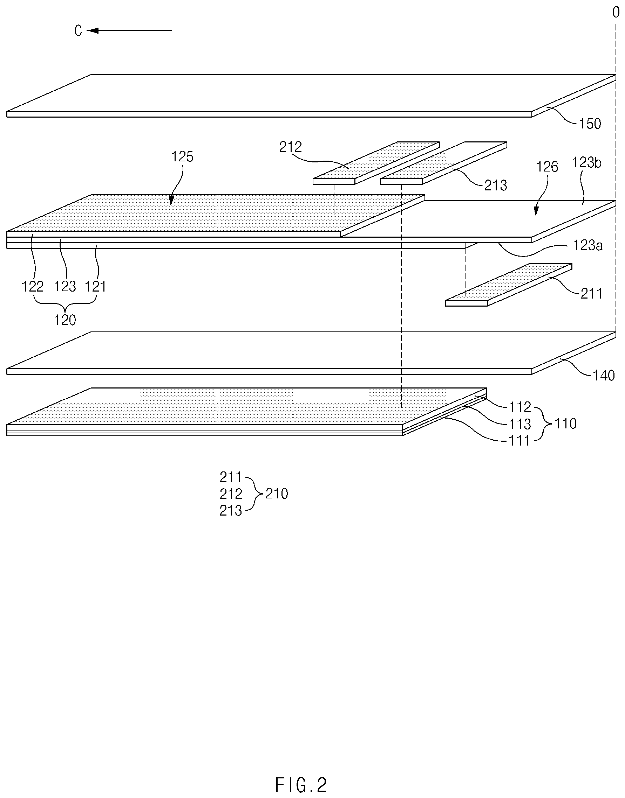

FIG. 1 is a perspective view of a secondary battery including an electrode assembly according to a first embodiment of the present invention, and FIG. 2 is an exploded perspective view illustrating an unfolded state before the electrode assembly of FIG. 1 is wound.

Referring to FIGS. 1 to 2, a secondary battery 10 according to an embodiment of the present invention may include an electrode assembly 100 and a battery case 180.

The electrode assembly 100 may be accommodated in the battery case 180. The battery case 180 may include a battery can 182 and a cap assembly 181.

The battery can 182 may include an accommodation part 183 in which the electrode assembly 100 is accommodated. An electrolyte may be injected into the accommodation part 183 so that the electrode assembly 100 is completely immersed in the battery can 182. An upper portion of the battery can 182 may be opened to be used as an inflow passage of the electrode assembly 100. The battery can 182 may include a metal. For example, the battery can 182 may include stainless steel.

Since the battery can 182 accommodates the electrode assembly 100, the battery can 182 may be provided in a shape corresponding to that of the electrode assembly 100. For example, the battery can 182 may be provided in a cylindrical shape so that the electrode assembly 100, which is provided in a jelly-roll shape, is accommodated.

The cap assembly 181 may be mounted on the battery can 182 to cover the opened upper portion of the battery can 182 and be coupled to the battery can 182 The cap assembly 181 may be provided by sequentially stacking a safety belt, a current blocking element, a positive temperature coefficient (PTC) element, and a top cap. The top cap is seated and coupled to the uppermost portion of the cap assembly 181 to transmit current generated in the secondary battery to the outside.

One of the battery can 182 and the cap assembly 181 may be electrically connected to a positive electrode tab 250 of the electrode assembly 100, and the other one of the battery can 182 and the cap 181 may be electrically connected to a negative electrode tab 260 of the electrode assembly 100. For example, the cap assembly 181 may be electrically connected to the positive electrode tab 250 through a welding process, and a bottom surface of the battery can 182 may be electrically connected to the negative electrode tab 260 through a welding process. As another example, one of the battery can 182 and the cap assembly 181 may be electrically connected to the positive electrode tab 250 and the negative electrode tab 260.

The electrode assembly 100 may be a chargeable and dischargeable power generating element. The electrode assembly 100 has a structure in which electrodes 130 and separators 160 are combined and alternately stacked. The electrode assembly 100 may be provided in a shape in which the electrodes 130 and the separators 160 are alternately combined to be wound. The electrode assembly 100 may have a structure of which a diameter is expanded radially in proportion to the number of winding rotation. Here, the electrode assembly 100 may be wound in a cylindrical shape wound around a winding central portion (or central axis) C. For example, the electrode 130 may include a positive electrode 110 and a negative electrode 120, and the separator 160 may include a first separator 140 and a second separator 150. The electrode assembly 100 may be an electrode assembly that is in the form of a jelly roll, which is wound in a cylindrical shape by sequentially stacking a positive electrode 110, a first separator 140, a negative electrode 120, and a second separator 150.

The positive electrode 110 may include a positive electrode collector 113, a first positive electrode active material layer 111 disposed on an inner surface (e.g., surface facing the winding central portion C) of the positive electrode collector 113, and a second positive electrode active material 112 disposed on an outer surface (e.g., surface facing the winding outer portion O) of the positive electrode collector 113. The positive electrode 110 may not have a positive electrode non-coating portion on the winding outer portion O. In the winding outer portion O, the positive electrode collector 113 may not protrude rather than the first positive electrode active material layer 111 and the second positive electrode active material layer 111.

For example, the positive electrode collector 113 may be provided as foil made of an aluminum material. At least one of the first positive electrode active material layer 111 or the second positive electrode active material layer may include, for example, lithium manganese oxide, lithium cobalt oxide, lithium nickel oxide, lithium iron phosphate, or a compound containing at least one of these and mixtures thereof.

The negative electrode 120 may include a negative electrode collector 123, a first negative electrode active material layer 121 disposed on an inner surface 123a (e.g., surface facing the winding central portion C) of the negative electrode collector 123, and a second negative electrode active material 122 disposed on an outer surface (e.g., surface facing the winding outer portion O) of the negative electrode collector 123. The negative electrode 120 may be divided into a negative electrode coating portion 125 (or coating portion) and a negative electrode non-coating portion (or non-coating portion) according to formation positions of the first negative electrode active material layer 121 and the second negative electrode active material layer 122. The negative electrode coating portion 125 may be an area on which the first negative electrode active material layer 121 and the second negative electrode active material layer 122 are disposed. The negative electrode non-coating portion 126 may be an area on which at least one of the first negative electrode active material layer 121 or the second negative electrode active material layer 122 is not disposed. At least one negative electrode tab 260 may be fused to the negative electrode collector 123 of the negative electrode non-coating portion 126 by a method such as welding.

The negative electrode collector 123 may be, for example, provided as foil made of a copper (Cu) or nickel (Ni) material. At least one of the first negative electrode active material layer 121 or the second negative electrode active material layer 122 may include, for example, synthetic graphite, a lithium metal, a lithium alloy, carbon, petroleum coke, activated carbon, graphite, a silicon compound, a tin compound, a titanium compound, or an alloy thereof. At least one of the first negative electrode active material layer 121 or the second negative electrode active material layer 122 may contain, for example, non-graphite SiO (silica) or SiC (silicon carbide).

Since the negative electrode 120 is disposed to surround the positive electrode 110 when wound, the negative electrode 120 may be provided to be longer than the positive electrode 110. In the winding outer portion O of the electrode assembly 100, the first negative electrode active material layer 121 disposed on the inner surface 123a of the negative electrode collector 123 may face the positive electrode 110. On the other hand, the second negative electrode active material layer 122 disposed on the outer surface 123b of the negative electrode collector 123 may not face the positive electrode 110. Thus, the first negative electrode active material layer 121 may be provided longer than the second negative electrode active material layer 122 on the winding outer portion O of the electrode assembly. In the winding outer portion O of the electrode assembly, an end (e.g., finish end) of the first negative electrode active material layer 121 may be disposed closer to the negative electrode collector 123 than an end (e.g., finish end) of the second negative electrode active material layer 122.

The separator 160 may be disposed between the positive electrode 110 and the negative electrode 120 to separate and electrically insulate the positive electrode 110 from the negative electrode 120. The separator 160 may include a first separator 140 and a second separator 150. The first separator 140 may be stacked on the outside of either the positive electrode 110 or the negative electrode 120. The second separator 150 may be stacked on the outside of the other one of the positive electrode 110 and the negative electrode 120. For example, when the first separator 140 is stacked on the outside of the positive electrode 110, the first separator 140 may be disposed between the second positive electrode active material layer 122 and the first negative electrode active material layer 111. When the second separator 150 is stacked on the outside of the negative electrode 120, the second separator 150 may be disposed between the first positive electrode active material layer 121 and the second negative electrode active material layer 112. When a stack, in which the positive electrode 110, the first separator 140, the negative electrode 120, and the second separator 150 are sequentially stacked, is wound, the jelly roll-type electrode assembly 110 in which the second separator 150 is disposed on the outermost surface, may be provided.

At least one of the first separator 140 or the second separator 150 may be, for example, a multi-layered film produced by polyethylene, polypropylene, or a combination thereof or a polymer film for solid polymer electrolytes or gel-type polymer electrolytes such as polyvinylidene fluoride, polyethylene oxide, polyacrylonitrile, or polyvinylidene fluoride hexafluoropropylene copolymers.

The electrode assembly 100 according to the present invention may include a plurality of negative electrode conductive members 200 disposed on at least a partial area of the negative electrode 120 in which cracks are likely to occur. The negative electrode conductive member 200 may include a first negative electrode conductive member 211, a second negative electrode conductive member 212, and a third negative electrode conductive member 213.

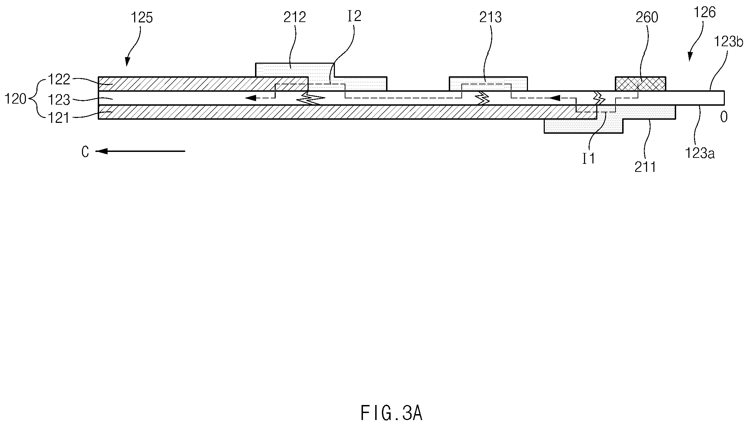

FIGS. 3a to 3d are cross-sectional views illustrating various examples of a negative electrode conductive member and a negative electrode tab, which are attached to a negative electrode illustrated in FIG. 2.

Referring to FIGS. 3a to 3d, a plurality of negative electrode conductive members 200 may be attached to an area on which cracks and/or disconnection due to the cracks are likely to occur. Even if the crack or/or disconnection due to the crack occurs in the negative electrode collector 123, a conductive path I1 and I2 may be formed between the negative electrode coating portion 125 and the negative electrode tab 260 through the plurality of negative electrode conductive members 200 to supply electrical signal (e.g., current) .

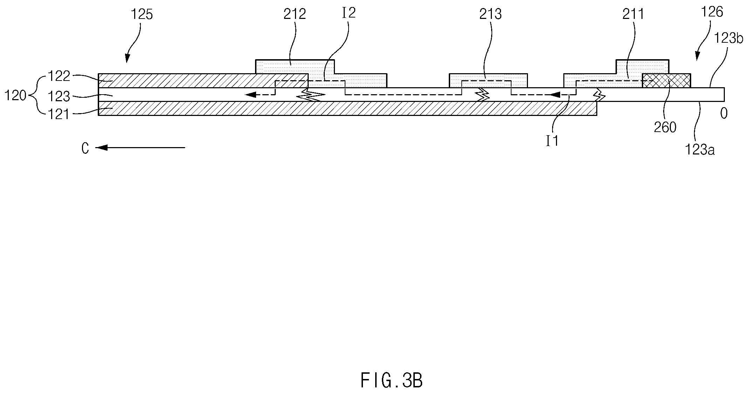

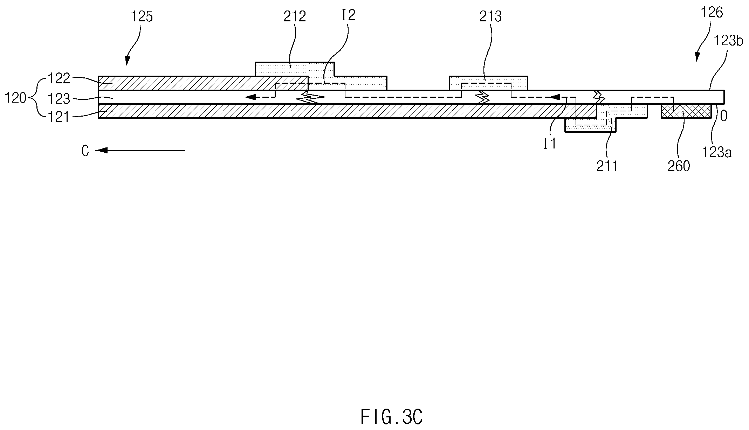

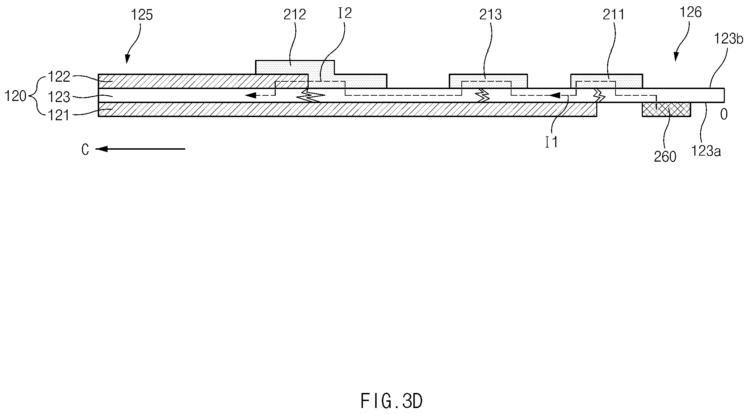

The first negative electrode conductive member 211 may be attached to the negative electrode 120 to overlap the finish end of the first negative electrode active material layer 121, at which the winding is finished. The first negative electrode conductive member 211 may be disposed to cover a stepped portion due to a thickness of the first negative electrode active material layer 121 disposed on the inner surface 123a of the negative electrode collector 123. When the disconnection due to the cracks occurs in the negative electrode collector 123, the first negative electrode conductive member 211 may form a first conductive path I1 that bypasses the disconnected portion of the negative electrode collector 123. The first negative electrode conductive member 211 may form the negative electrode collector 123 and the first conductive path I1. The first negative electrode conductive member 211 illustrated in FIGS. 3a and 3c may be in contact with the negative electrode collector 123 and the first negative electrode active material layer 121 to form the first conductive path I1 between the negative electrode collector 123 and the first negative electrode active material layer 121. The first negative electrode conductive member 211 illustrated in FIG. 3b may be in contact the negative electrode tab 260 and the first negative electrode collector 123 to form the first conductive path I1 between the negative electrode tab 260 and the first negative electrode collector 123. The first negative electrode conductive member 211 illustrated in FIG. 3d may be in contact with one end and the other end of the negative electrode collector 123 to form the first conductive path I1 between the one end and the other end of the negative electrode collector 123.

Even if the disconnection due to the cracks occurs in the negative electrode collector 123 that is in contact with the finish end of the first negative electrode active material layer 121, the electrical connection within the negative electrode 120 may be maintained through the first negative electrode conductive member 211.

The second negative electrode conductive member 212 may be attached to the negative electrode 120 to overlap the finish end of the second negative electrode active material layer 122, at which the winding is finished. The first negative electrode conductive member 212 may be disposed to cover a stepped portion due to a thickness of the first negative electrode active material layer 122 disposed on the outer surface 123b of the negative electrode collector 123. When the disconnection due to the cracks occurs in the negative electrode collector 123, the second negative electrode conductive member 212 may form the second conductive path I2 that bypasses the disconnected portion of the negative electrode collector 123. The second negative electrode conductive member 212 may be in contact with the negative electrode collector 123 and the second negative electrode active material layer 122 to form the second conductive path between the negative electrode collector 123 and the second negative electrode active material layer 122. The second conductive path I2 may be electrically connected to the first conductive path I1. Even if the disconnection due to the cracks occurs in the negative electrode collector 123 that is in contact with the end of the second negative electrode active material layer 122, the electrical connection within the negative electrode 120 may be maintained through the second negative electrode conductive member 212.

The third negative electrode conductive member 213 may be attached to the negative electrode 120 to overlap the finish end of the positive electrode 110 in which the winding of the positive electrode 110 is finished. When the disconnection occurs due to the cracks in the negative electrode collector 123, the third negative electrode conductive member 213 may form the conductive path that bypasses the disconnected portion of the negative electrode collector 123. Even if the disconnection due to the cracks occurs in the negative electrode collector 123 that overlaps the positive electrode 110, the electrical connection within the negative electrode 120 may be maintained through the third negative electrode conductive member 213.

As described above, the present invention may maintain the conductivity of the negative electrode collector 123 through the plurality of negative electrode conductive members 211, 212, and 213 to prevent performance degradation of the battery cell and ensure stability of the battery cell. In addition, the present invention may stably secure the conductive path between the negative electrode tab 260 and the negative electrode 120 through the negative electrode conductive members 211, 212, and 213 to prevent charging and discharging current from being concentrated at the ends of the negative electrode active material layers 211 and 212. Thus, heat generated during the charging and discharging of the electrode assembly may be prevented from being concentrated to the ends of the negative electrode active material layers 211 and 212.

The negative electrode tab 260 may be disposed adjacent to at least one of the plurality of negative electrode conductive members 211, 212, and 213 disposed on the negative electrode non-coating portion 126. The negative electrode tab 260 may be attached and fixed to the negative electrode non-coating portion 126 as illustrated in FIGS. 3a to 3d. The first negative electrode conductive member 211 illustrated in FIGS. 3a, 3b, and 3d may be disposed to overlap at least a portion of the negative electrode tab 260 or may be disposed to be spaced apart from the negative electrode tab 260 as illustrated in FIG. 3c.

According to an embodiment, the negative electrode tab 260 may be attached to the outer surface 123b of the negative electrode collector 123 as illustrated in FIG. 3a. The first negative electrode conductive member 211 may be attached to the inner surface 123a of the negative electrode collector 123, which is a plane different from the negative electrode tab 260. The second negative electrode conductive member 212 and the third negative electrode conductive member 213 may be disposed on the outer surface 123b of the negative electrode collector 123, which is on the same plane as the negative electrode tab 260. At least a portion of the negative electrode tab 260 may overlap the first negative electrode conductive member 211 with the negative electrode collector 123 therebetween. Thus, since there is no need to provide a separate space for disposing the first negative electrode conductive member 211, an increase in length of the negative electrode collector 123 may be prevented.

According to an embodiment, the negative electrode tab 260 may be attached to the outer surface 123b of the negative electrode collector 123 as illustrated in FIG. 3b. The first negative electrode conductive member 211, the second negative electrode conductive member 212, and the third negative electrode conductive member 213 may be attached to the outer surface 123b of the negative electrode collector 123. At least a portion of the negative electrode tab 260 may be in direct contact with the first negative electrode conductive member 211 to overlap the first negative electrode conductive member 211. Thus, since a space occupied by the first negative electrode conductive member 211 is minimized, an increase in length of the negative electrode collector 123 may be minimized.

According to an embodiment, the negative electrode tab 260 may be attached to the inner surface 123a of the negative electrode collector 123 as illustrated in FIG. 3c. The second negative electrode conductive member 212 and the third negative electrode conductive member 213 may be attached to the inner surface 123a of the negative electrode collector 123, which is a plane different from the negative electrode tab 260. The first negative electrode conductive member 211 may be disposed on the outer surface 123b of the negative electrode collector 123, which is the same plane as the negative electrode tab 260. The first negative electrode conductive member 211 may be disposed to be spaced apart from the negative electrode tab 260 in the winding direction.

According to an embodiment, the negative electrode tab 260 may be attached to the inner surface 123a of the negative electrode collector 123 as illustrated in FIG. 3d. The first negative electrode conductive member 211, the second negative electrode conductive member 212, and the third negative electrode conductive member 213 may be attached to the outer surface 123b of the negative electrode collector 123. At least a portion of the negative electrode tab 260 disposed on the plane different from the first negative electrode conductive member 211 may overlap the first negative electrode conductive member 211 with the negative electrode collector 123 therebetween.

According to an embodiment, the first negative electrode conductive member 211, the second negative electrode conductive member 212, and the third negative electrode conductive member 213 illustrated in FIGS. 3b and 3d may be disposed on the same plane. Thus, since the process of attaching the first negative electrode conductive member 211, the second negative electrode conductive member 212, and the third negative electrode conductive member 213 is performed at the same time, the attachment process may be simplified and simple.

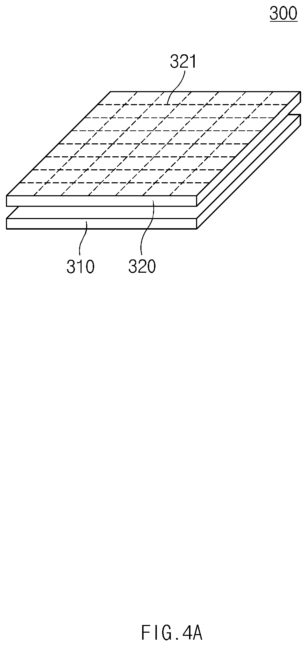

FIGS. 4a to 4c are perspective views illustrating various examples of the conductive member illustrated in FIG. 2.

Referring to FIGS. 4a to 4c, a conductive member 300 provided in the electrode assembly of the present invention (e.g., the negative electrode conductive member 211, 212, and 213 of FIGS. 2 and 3a to 3d) may be provided in the form of an adhesive tape including a base material layer 310 and an adhesive layer 320. For example, since both the base material layer 310 and the adhesive layer 320 have adhesive properties, the conductive member 300 may be provided in the form of a double-sided adhesive tape. As another example, since the base material layer 310 is non-adhesive, and the adhesive layer 320 is adhesive, the conductive member 300 may be provided in the form of one-sided adhesive tape.

When the conductive member 300 is attached to the negative electrode 120, the conductive member 300 may be disposed between the negative electrode 120 and the second separator 150. The base material layer 310 of the conductive member 300 may face (or be in contact with) the second separator 150. The adhesive layer 320 of the conductive member 300 may face (or be in contact with) the negative electrode 120.

When the conductive member 300 is attached to the positive electrode 110, the conductive member 300 may be disposed between the positive electrode 110 and the first separator 140. The base material layer 310 of the conductive member 300 may face (or be in contact with) the first separator 140. The adhesive layer 320 of the conductive member 300 may face (or be in contact with) the positive electrode 110.

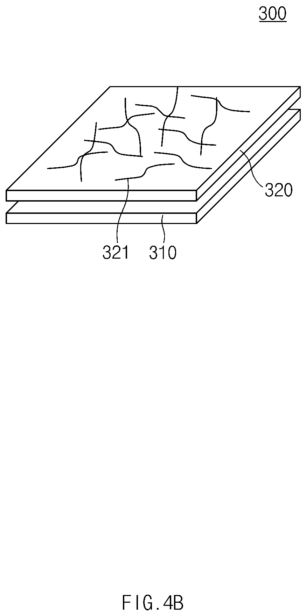

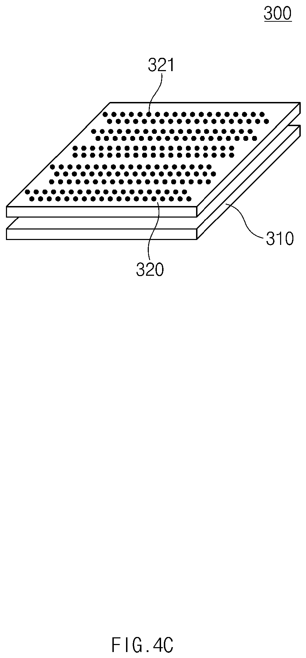

The adhesive layer 320 may include an adhesive material and a first conductive material 321 that is provided in powder form so as to have adhesive and conductive properties. The first conductive material 321 provided in the adhesive layer 320 may be provided in the form of a pattern (e.g. mesh) as illustrated in FIG. 4a, in the form of a wire as illustrated in FIG. 4b, or in the form of a dot as illustrated in FIG. 4c. The first conductive material 321 may include at least one metal powder of Al, Cu, Ni, Au, and Pt. The first conductive material 321 may be determined depending on the material of the electrode 130 to which the conductive member 300 is attached. For example, when the conductive member 300 is attached to the negative electrode 120, the first conductive material 321 may be made of the same material (e.g., Cu) as the negative electrode collector 123. When the conductive member 300 is attached to the positive electrode 110, the first conductive material 321 may be made of the same material (e.g., Al) as the positive electrode collector 113.

The first conductive material 321 of the conductive member 300 may be electrically connected to the collectors 113 and 123. When the conductive member 300 is applied to the negative electrode 120, the first conductive material 321 may be electrically connected to the negative electrode collector 123 and the negative electrode active material layers 121 and 122. Thus, even if the disconnection due to the cracks occurs in the negative electrode collector 123 that is in contact with the end of the first negative electrode active material layer 121, the electrical current in the negative electrode 120 may be maintained through the first conductive material 321 of the conductive member 300.

The base material layer 310 may be made of at least one of an insulating material or second conductive material. The base material layer 310 may include an insulating material such as fabric or/and polymer, include a second conductive material such as Al, Cu, or/and a carbon-based material, or include an insulating material and a second conductive material. For example, when the conductive member 320 is applied to the stepped portion between the collectors 113 and 123 and the active material layers 111, 112, 121 and 122, the base material layer 310 may be made of at least one of a polymer or a carbon-based material. When the conductive member 300 is not attached to the active material layers 111, 112, 121, and 122, but is attached to the collectors 113 and 123, the base material layer 310 may be made of at least one of Al, Cu, or fabric. Since the second conductive material contained in the base material layer 310 is electrically connected to the first conductive material 321, conductivity of the conductive member 300 may be improved.

### Electrode assembly according to second embodiment

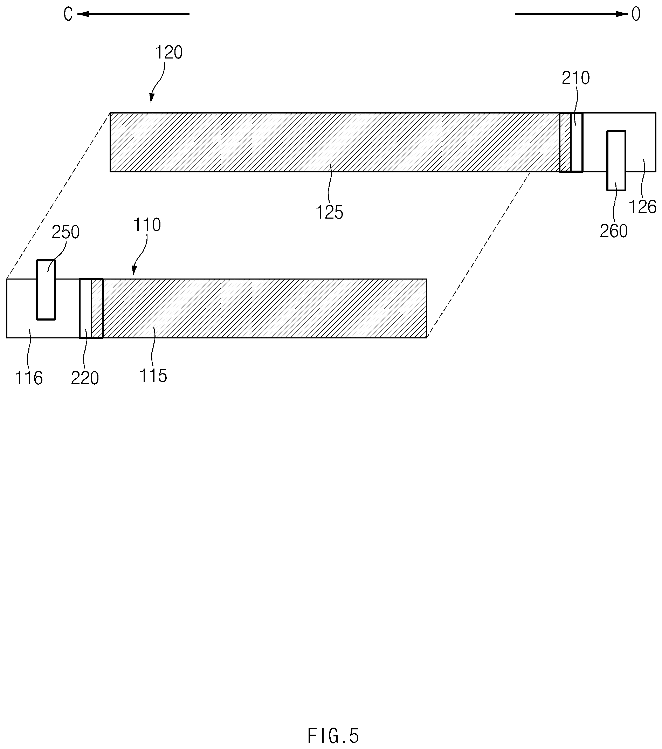

FIG. 5 is a view illustrating a state in which a positive electrode and a negative electrode are unfolded before the electrode assembly is wound according to a second embodiment of the present invention. An electrode assembly according to the second embodiment of the present invention has the same components as the electrode assembly according to the first embodiment of the present invention illustrated in FIGS. 1 to 4 except that the electrode assembly further include a positive electrode conductive member. Thus, detailed descriptions of the same components will follow the descriptions of FIGS. 1 to 4b.

Referring to FIG. 5, an electrode assembly according to the present invention may include a negative electrode 120, an positive electrode 110, a negative electrode conductive member 210 (e.g., the negative electrode conductive member 210 in FIG. 2), and an positive electrode conductive member 220.

The negative electrode 120 may include a negative electrode coating portion 125 and a negative electrode non-coating portion 126. The negative electrode coating portion 125 may include a negative electrode collector (e.g., negative electrode collector 123 in FIG. 2), a first negative electrode active material layer (e.g., first negative electrode active material layer 121 in FIG. 2), and a second negative electrode active material layer (e.g., the second positive electrode active material layer 122 of FIG. 2). The negative electrode non-coating portion 126 may not include at least one of the first negative electrode active material layer or the second negative electrode active material layer. At least a portion of the negative electrode collector disposed on the negative electrode non-coating portion 126 may directly face the separator. The negative electrode tab 260 attached to the negative electrode non-coating portion 126 may be disposed toward a winding outer portion O. The negative electrode tab 260 may be disposed adjacent to the negative electrode conductive member 210 (e.g., at least one of the negative electrode conductive member 211, 212, or 213 of FIGS. 2 and 3a to 3d). The negative electrode tab 260 may be disposed to be spaced apart from the negative electrode conductive member 210 or may be disposed to overlap at least a portion of the negative electrode conductive member 210.

The negative electrode conductive member 210 may be provided to cover a stepped portion between at least one of the first negative electrode active material layer or the second negative electrode active material layer and the negative electrode collector disposed on the negative electrode non-coating portion 126.

The positive electrode 110 may include a positive electrode coating portion 115 and a positive electrode non-coating portion 116. The positive electrode coating portion 115 may include a positive electrode collector (e.g., the positive electrode collector 113 in FIG. 2), a first positive electrode active material layer (e.g., the first positive electrode active material layer 111 in FIG. 2), and a second positive electrode active material layer (e.g., the second positive electrode active material layer 112 of FIG. 2). The positive electrode non-coating portion 116 may not include at least one of the first positive electrode active material layer or the second positive electrode active material layer. At least a portion of the positive electrode collector disposed on the positive electrode non-coating portion 116 may directly face the separator. At least one positive electrode tab 250 may be fused to the positive electrode non-coating portion 116 using a method such as welding. The positive electrode tab 250 attached to the positive electrode non-coating portion 116 may be disposed on a side of the winding central portion C. The positive electrode tab 250 may be disposed adjacent to the positive electrode conductive member 220. The positive electrode tab 250 may be disposed to be spaced apart from the positive electrode conductive member 220 or may be disposed to overlap at least a portion of the positive electrode conductive member 220.

The positive electrode conductive member 220 may be provided to cover a stepped portion between at least one of the first positive electrode active material layer or the second positive electrode active material layer and the positive electrode collector disposed on the positive electrode non-coating portion 116. When a disconnection occurs between the positive electrode active material layer and the positive electrode collector, the positive electrode conductive member 220 may form a conductive path that bypasses a disconnected portion. Thus, even if the disconnection occurs in the positive electrode 110, the electrical connection within the positive electrode 110 may be maintained through the positive electrode conductive member 220.

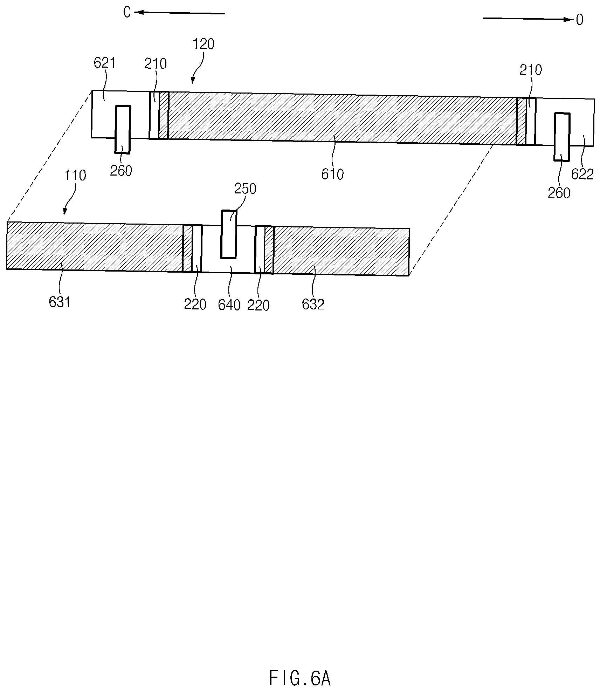

FIGS. 6a to 6c are plan views illustrating a state in which the negative electrode and the positive electrode, to which at least one electrode tab is attached before the electrode assembly is wound, according to the present invention.

Referring to FIGS. 6a to 6c, a plurality of negative electrode tabs 260 may be attached to the negative electrode 120. One end of the negative electrode tab 260 may be attached and fixed to negative electrode non-coating portions 621, 622, and 623 (e.g., the negative electrode non-coating portion 126 in FIGS. 2 to 3 and 5), and the other end may protrude rather than the negative electrode non-coating portion 621, 622, and 623. The negative electrode tab 260 may be disposed adjacent to the negative electrode conductive member 210 (e.g., at least one of the negative electrode conductive members 211, 212, and 213 in FIGS. 2 and 3a to 3d) disposed on the negative electrode non-coating portions 621, 622, and 623.

At least one positive electrode tab 250 may be attached to the positive electrode 110. The other end of the positive electrode tab 250 may be attached and fixed to the positive electrode non-coating portions 640, 641, and 642 (e.g., the positive electrode non-coating portion 116 in FIGS. 2 to 3 and 5), and one end may protrude rather than the positive electrode non-coating portions 640, 641, and 642. The positive electrode tab 250 may be disposed adjacent to the positive electrode conductive member 220 disposed on the positive electrode non-coating portions 640, 641, and 642.

According to an embodiment, the electrode tabs 250 and 260 attached to at least one of the positive electrode 110 and the negative electrode 120 may be disposed at a winding intermediate portion between the winding central portion C and the winding outer portion O.

For example, as illustrated in FIG. 6a, a plurality of negative electrode tabs 260 may be attached to the negative electrode 120. The negative electrode 120 may include a negative electrode coating portion 611, a first negative electrode non-coating portion 621 disposed toward the winding central portion C with respect to the negative electrode coating portion 611, and a second negative electrode non-coating portion 622 disposed toward the winding outer portion O with respect to the negative electrode coating portion 611. A negative electrode tab 260 may be attached on each of the first negative electrode non-coating portion 621 and the second negative electrode non-coating portion 622. Thus, a signal transmission path may be formed between the negative electrode tab 260 attached to the first negative electrode non-coating portion 621 and the negative electrode coating portion 611 and between the negative electrode tab 260 attached to the second negative electrode non-coating portion 622 and the negative electrode coating portion 611 to supply current in both directions. One positive electrode tab 250 may be attached to the positive electrode 110. The positive electrode 110 may include a positive electrode non-coating portion 640, a first positive electrode coating portion 631 disposed toward the winding central portion C with respect to the positive electrode non-coating portion 640, and a second positive electrode non-coating portion 632 disposed toward the winding outer portion O with respect to the negative electrode non-coating portion 640. The positive electrode non-coating portion 640 may be disposed at a winding intermediate portion between the winding central portion C and the winding outer portion O. A signal transmission path may be formed between the positive electrode tab 250 attached to the positive electrode non-coating portion 640 and the first positive electrode coating portion 611 and between the positive electrode tab 250 attached to the positive electrode non-coating portion 640 and the second positive electrode coating portion 611 to supply the current in both directions. At least one conductive member 210 and 220 may be attached to each of the positive electrode 110 and the negative electrode 120. The positive electrode conductive member 220 may be attached to cover a stepped portion between the positive electrode active material layer provided in at least one of the first positive electrode coating portion 631 and the second positive electrode coating portion 632 and the positive electrode collector of the positive electrode non-coating portion 640. Thus, even if cracks or/and disconnection due to the cracks occurs in the positive electrode collector provided in the positive electrode non-coating portion 640, electrical connection between the positive electrode coating portions 631 and 632 and the positive electrode tab 250 may be maintained through the positive electrode conductive member 220. A negative electrode conductive member 210 may be attached to cover a stepped portion between each of the first negative electrode non-coating portion and the second negative electrode non-coating portion 621 and the negative electrode coating portion 610. Thus, even if cracks or/and disconnection due to the cracks occurs in the negative electrode collector provided in each of the first negative electrode non-coating portion 621 and the second negative electrode non-coating portion 622, electrical connection between the negative electrode coating portion 610 and the negative electrode tab 260 may be maintained through the negative electrode conductive member 210.

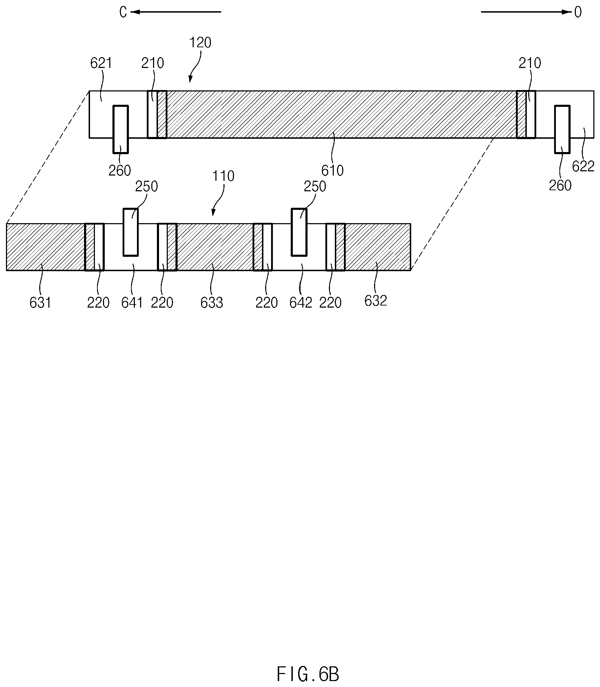

As another example, as illustrated in FIG. 6b, a plurality of positive electrode tabs 250 may be attached to the positive electrode 110. The positive electrode 110 may include first to third positive electrode coating portions 631, 632, and 633, and first and second positive electrode non-coating portions 641 and 642. The first positive electrode coating portion 631 may be disposed toward the winding central portion with respect to the third positive electrode coating portion 633. The second positive electrode coating portion 632 may be disposed toward the winding outer portion with respect to the third positive electrode coating portion 633. The first positive electrode non-coating portion 641 may be disposed between the first positive electrode coating portion 631 and the third positive electrode coating portion. The second positive electrode non-coating portion 642 may be disposed between the second positive electrode coating portion 632 and the third positive electrode coating portion 633. A signal transmission path may be formed between each of the first positive electrode coating portion 631 and the third positive electrode coating portion 633 and the positive electrode tab 250 attached to the first positive electrode non-coating portion 641 in both directions to supply the current in both the directions. A signal transmission path may be formed between each of the second positive electrode coating portion 632 and the third positive electrode coating portion 633 and the positive electrode tab 250 attached to the second positive electrode non-coating portion 642 in both directions to supply the current in both the directions. A positive electrode conductive member 220 may be attached to an area of the positive electrode 110, in which there is a risk of the disconnection. The positive electrode conductive member 220 may be attached to cover a stepped portion between the first positive electrode coating portion 631 and the first positive electrode non-coating portion 641, a stepped portion between the first positive electrode non-coating portion 641 and the second positive electrode coating portion 632, a stepped portion between the second positive electrode coating portions 632 and the second positive electrode non-coating portion 642, and a stepped portion between the second positive electrode non-coating portion 642 and the third positive electrode coating portion 633. Thus, even if cracks or/and disconnection due to the cracks occurs in the positive electrode collector, electrical connection between the positive electrode coating portions 631, 632, and 633 and the positive electrode tab 250 may be maintained through the positive electrode conductive member 220.

Each of the negative electrode 120, the negative electrode tab 260, and the negative electrode conductive member 210 illustrated in FIG. 6b may be substantially the same as each of the negative electrode 120, the negative electrode tab 260, and the negative electrode conductive member 210 illustrated in FIG. 6a, and thus, description of FIG. 6a will be cited.

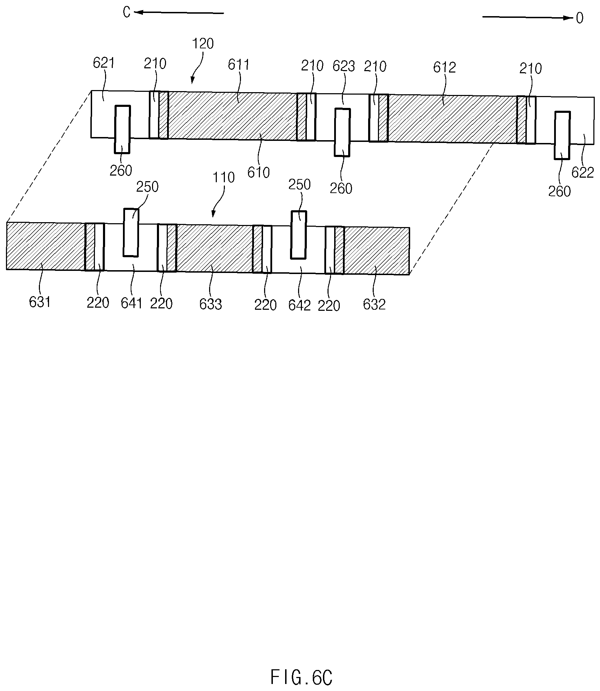

As another example, as illustrated in FIG. 6c, at least three negative electrode tabs 260 may be attached to the negative electrode 120. The negative electrode 120 may include first to third negative electrode non-coating portions 621, 622, and 623, and first and second negative electrode coating portions 611 and 612. The first negative electrode non-coating portion 621 may be disposed toward the winding central portion C with respect to the third negative electrode non-coating portion 623. The second negative electrode non-coating portion 622 may be disposed toward the winding outer portion O with respect to the third negative electrode non-coating portion 623. The first negative electrode coating portion 611 may be disposed between the first negative electrode non-coating portion 621 and the third negative electrode non-coating portion 623. The second negative electrode coating portion 612 may be disposed between the second negative electrode non-coating portion 622 and the third negative electrode non-coating portion 623. A signal transmission path may be formed between each of the negative electrode tab 260 attached to the first negative electrode non-coating portion 621 and the negative electrode tab 260 attached to the third negative electrode non-coating portion 623, and the first negative electrode coating portion 611 in both the directions to supply the current in both the directions. A signal transmission path may be formed between each of the negative electrode tab 260 attached to the second negative electrode non-coating portion 622 and the negative electrode tab 260 attached to the third negative electrode non-coating portion 623, and the second negative electrode coating portion 612 in both the directions to supply the current in both the directions.

A negative electrode conductive member 210 may be attached to an area of the negative electrode 120, in which there is a risk of the disconnection. The negative electrode conductive member 210 may be attached to cover a stepped portion between the first negative electrode coating portion 611 and the first negative electrode non-coating portion 621, a stepped portion between the first negative electrode coating portion 611 and the third negative electrode non-coating portion 623, a stepped portion between the third negative electrode non-coating portions 623 and the second negative electrode coating portion 621, and a stepped portion between the second negative electrode coating portion 621 and the second negative electrode non-coating portion 622. Thus, even if cracks or/and disconnection due to the cracks occurs in the negative electrode collector, electrical connection between the negative electrode coating portions 611 and 612 and the negative electrode tab 260 may be maintained through the negative electrode conductive member 210.

Each of the positive electrode 110, the positive electrode tab 250, and the positive electrode conductive member 220 illustrated in FIG. 6c may be substantially the same as each of the positive electrode 110, the positive electrode tab 250, and the positive electrode conductive member 220 illustrated in FIG. 6b, and thus, description of FIG. 6b will be cited.

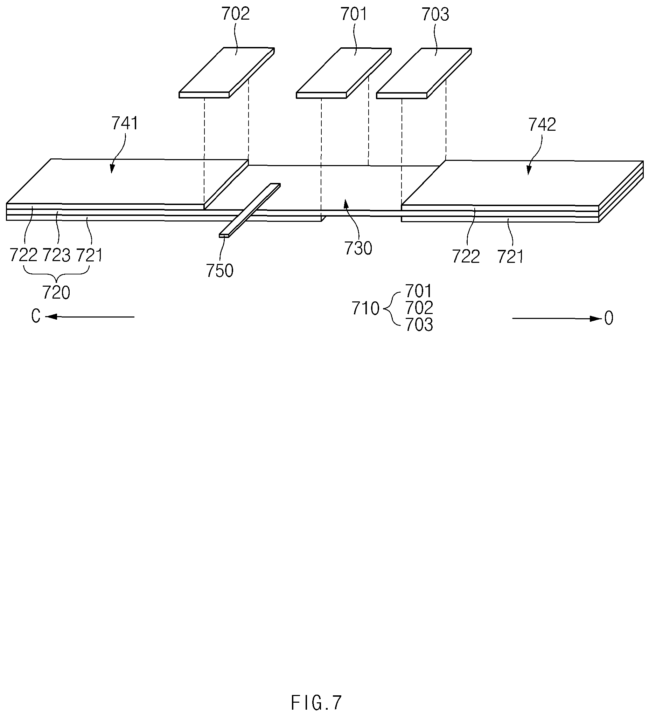

FIG. 7 is an exploded view for explaining the non-coating portion disposed on the winding central portion illustrated in FIGS. 6a to 6c in detail.

Referring to FIG. 7, at least one electrode 720 of the positive and negative electrodes may include a collector 723 (e.g., the negative electrode collector 113 and the positive electrode collector 123 in FIG. 2), a first active material layer 721 (e.g., the first negative electrode active material layer 111 and the first positive electrode active material layer 121 in FIG. 2) disposed on an inner surface of the collector 723, and a second active material layer 722 (e.g., the second positive electrode active material layer 112 and the second positive electrode active material layer 122 of FIG. 2) disposed on an outer surface of the collector 723. In the winding intermediate portion between the winding outer portion O and the winding central portion C, the electrode 720 may include a non-coating portion 730, a first coating portion 741 disposed at one side with respect to the non-coating portion 730, and a second coating portion 742 disposed at the other side of the non-coating portion 730.

The number of conductive members 700 may be determined depending on a position of an end of each of the first active material layer 721 and the second active material layer 722. For example, the ends of the first active material layer 721 and the second active material layer 722 may be disposed on virtual vertical lines different from each other. In this case, cracks due to the stepped portion between the first active material layer 721 and the collector 723 and cracks due to the stepped portion between the second active material layer 722 and the collector 723 may occur at different positions. Thus, at least two conductive members 710 may be provided to prevent disconnection due to cracks occurring at different positions. As another example, the ends of the first active material layer 721 and the second active material layer 722 may be disposed on the same virtual vertical line. In this case, cracks due to the stepped portion between the first active material layer 721 and the collector 723 and cracks due to the stepped portion between the second active material layer 722 and the collector 723 may occur at the same position. Thus, at least two conductive members 710 may be provided to prevent disconnection due to cracks occurring at the same position.

The conductive member 700 disposed at the winding intermediate portion may include a plurality of conductive members 701, 702, and 703. For example, the conductive member 710 may include a first conductive member 701, a second conductive member 702, and a third conductive member 703.

Since the two stepped portions disposed on the different virtual vertical lines are formed between the first coating portion 741 and the non-coating portion 742, the first conductive member 701 and the second conductive member 702 may be disposed between the first coating portion 741 and the non-coating portion 730. The first conductive member 701 may be disposed to cover the stepped portion between the first active material layer 721 and the collector 723, which are provided on the first coating portion 741. The second conductive member 702 may be disposed to cover the stepped portion between the second active material layer 722 and the collector 723, which are provided on the first coating portion 741.

Since the two stepped portions disposed on the same virtual vertical line are formed between the second coating portion 742 and the non-coating portion 730, the third conductive member 703 may be disposed between the second coating portion 742 and the non-coating portion 730. The third conductive member 730 may be disposed to cover the stepped portion between one of the first active material layer 721 and the second active material layer 722, which are provided on the second coating portion 742, and the collector 723.

As described above, even if the disconnection due to the cracks occurs in the collector 723 that forms the stepped portion with the active material layers 721 and 722, electrical connection within the electrode 720 may be maintained through the conductive member 710. Thus, the present invention may maintain conductivity of the electrode 720 through the conductive member 710 to prevent performance degradation of the battery cell and ensure stability of the battery cell.

The electrode assembly described above is not limited to the embodiments described in each drawing, and the structures described in each drawing may be applied in combination. The secondary battery including the electrode assembly according to the present invention may employ any one of the negative electrodes, which are illustrated in FIGS. 3a to 3d, in plurality, or may employ a combination of the negative electrodes illustrated in FIGS. 3a to 3d. The electrode assembly according to the present invention may employ any one of the conductive members, which are illustrated in FIGS. 4a to 4c, in plurality or may employ a combination of the conductive members illustrated in FIGS. 4a to 4c. The conductive member including the base material layer and the adhesive conductive layer illustrated in FIGS. 4a to 4c according to the present invention may be disposed on at least one of the winding central portion, the winding outer portion, or the winding intermediate portion. The electrode assembly according to the present invention may employ either the positive electrode and the negative electrode illustrated in FIGS. 6a to 6c, or may employ a combination of the positive electrode and the negative electrode described in FIGS. 6a to 6c. In the electrode assembly according to the present invention, the winding central portion described in FIG. 7 may be applied to respective embodiments. The electrode assembly according to the present invention has been described as the structure applied to the cylindrical secondary battery as an example, but this is not limited, and the conductive member according to the present invention may also be applied to the pouch-type or prismatic battery.

The secondary battery including the above-described electrode assembly may be applied to various devices. It may be applied to transportation means such as electric bicycles, electric vehicles, hybrids, etc., but is not limited thereto and may be applied to various devices capable of using the battery module.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

100: Electrode assembly
110: Positive electrode
120: Negative electrode
140: First separator
150: Second separator
250, 260: Electrode tab
210, 220, 701, 702, 703: Conductive member

## Claims

1. An electrode assembly comprising:
a positive electrode and a negative electrode;
a separator disposed between the positive electrode and the negative electrode; and
a plurality of conductive members disposed between at least one of the positive electrode or the negative electrode and the separator,
wherein at least one electrode of the positive electrode and the negative electrode comprises:
a collector;
a first active material layer disposed on an inner surface of the collector;
a second active material layer disposed on an outer surface of the collector,
wherein the conductive member comprises:
a first conductive member disposed to overlap an end of the first active material layer so as to form a first conductive path together with the collector; and
a second conductive member disposed to overlap an end of the second active material layer so as to form a second conductive path between the collector and the second active material layer.

2. The electrode assembly of claim 1, wherein the end of the first active material layer is disposed closer to the end of the collector than the end of the second active material layer.

3. The electrode assembly of claim 1, wherein the first conductive member is disposed on the inner surface of the collector to form the first conductive path between the first active material layer and the collector, and
the second conductive member is disposed on the outer surface of the collector to form the second conductive path that is electrically connected to the first conductive path.

4. The electrode assembly of claim 1, wherein the first conductive member and the second conductive member are disposed to be spaced apart from each other on the outer surface of the collector, and
the first conductive path and the second conductive path are electrically connected to each other.

5. The electrode assembly of claim 1, wherein the conductive member comprises:
a base material layer disposed between the separator and the electrode; and
an adhesive conductive layer which is disposed on the base material layer, comprises a first conductive material, and is attached to the electrode.

6. The electrode assembly of claim 5, wherein the first conductive material is made of the same material as the collector and is aligned in the form of a dot, linear, or pattern.

7. The electrode assembly of claim 5, wherein the first conductive material comprises at least one metal powder of Al, Cu, Ni, Au, and Pt.

8. The electrode assembly of claim 5, wherein the base material layer comprises at least one of a second conductive material or an insulating member.

9. The electrode assembly of claim 8, wherein at least one of the first conductive member or the second conductive member is attached between one of the first and second active material layers and the collector, and
the base material layer comprises at least one of a polymer or a carbon-based material.

10. The electrode assembly of claim 8, wherein at least one of the first conductive member or the second conductive member is attached to the collector except for the first active material layer and the second active material layer, and
the base material layer comprises at least one of Al, Cu, or fabric.

11. The electrode assembly of claim 8, wherein the first conductive material is electrically connected to the second conductive material.

12. The electrode assembly of claim 1, wherein the electrode is divided into:
a coating portion comprising the collector, the first active material layer, and the second active material layer; and
a non-coating portion which does not comprise at least one of the first active material layer or the second active material layer and comprises the collector,
wherein an electrode tab is attached to the non-coating portion of the electrode.

13. The electrode assembly of claim 12, wherein at least one of the first conductive member or the second conductive member is disposed between at least one of both sides of the electrode tab and the collector.

14. The electrode assembly of claim 12, further comprising a third conductive member disposed on the non-coating portion of the negative electrode and disposed at a position corresponding to a winding finish end of the positive electrode.

15. The electrode assembly of claim 14, wherein the third conductive member is disposed on the same plane as at least a portion of the first conductive member.

16. The electrode assembly of claim 1, wherein the first conductive member is configured to cover a winding finish end of the first active material layer, and
the second conductive member is configured to cover a winding finish end of the second active material layer.

17. A secondary battery comprising the electrode assembly of any one of claims 1 to 16.
